# EUROPÄISCHE PATENTSCHRIFT

(11) **EP 2 026 948 B1**
(45) Veröffentlichungstag und Bekanntmachung des Hinweises auf die Patenterteilung: **12.08.2015**
(21) Anmeldenummer: 07725437.3
(22) Anmeldetag: 23.05.2007
(51) Int. Cl.: B29C 51/26, B29C 49/04, B29C 49/20, B29C 51/12, B29C 49/48, B29C 49/00

(54) **FORMWERKZEUG ZUR HERSTELLUNG VON EXTRUSIONSBLASGEFORMTEN ERZEUGNISSEN MIT EINLEGETEILEN AN DER INNENSEITE**
MOULD FOR PRODUCTION OF EXTRUSION-BLOW-MOULDED PRODUCTS WITH INSERTS ON THE INNER SIDE
OUTIL DE MOULAGE POUR LA FABRICATION DE PRODUITS MOULÉS PAR EXTRUSION-SOUFFLAGE AVEC PIÈCES DE GARNITURE DU CÔTÉ INTÉRIEUR

(30) Priorität: 09.06.2006 DE 102006027256
(43) Veröffentlichungstag der Anmeldung: 25.02.2009
(73) Patentinhaber: Kautex Textron GmbH & Co. KG, 53229 Bonn (DE)
(72) Erfinder: BORCHERT, Matthias, 53179 Bonn (DE); EULITZ, Dirk, 53115 Bonn (DE); WOLTER, Gerd, 53693 Königswinter (DE); LORENZ, Harald, 53474 Bad Neuenahr-Ahrweiler (DE); BIENHÜLS, Deniz, 53578 Windhagen (DE); MEHREN, Christoph, 53639 Königswinter (DE); KRÄMER, Timo, 57635 Hirz-Maulsbach (DE); LÖWER, Robert, 53359 Rheinbach (DE)
(74) Vertreter: Kierdorf Ritschel
(86) Internationale Anmeldenummer: PCT/EP2007/004537
(87) Internationale Veröffentlichungsnummer: WO 2007/140875

(56) Entgegenhaltungen:
- EP-A- 1 334 817
- DE-A1- 10 010 900
- JP-A- 61 114 835
- JP-A- 2006 015 744

## Beschreibung

Die Erfindung betrifft ein Formwerkzeug zur Herstellung von extrusionsblasgeformten Erzeugnissen.

Bekannte Formwerkzeuge zum Extrusionsblasformen bestehen üblicherweise aus zwei Formhälften, die komplementär zueinander ausgebildet sind und gemeinsam ein Formnest begrenzen. Beim Extrusionsblasformen wird ein thermoplastisches Extrudat, meistens in Form eines Schlauchs, zwischen die geöffneten Hälften des Werkzeugs gebracht. Das Werkzeug schließt sich um den Vorformling, dieser wird innerhalb des Werkzeugs an die Innenwandung der von dem Werkzeug gebildeten Kavität angelegt, sodass der fertige Artikel eine äußere Gestalt aufweist, die der inneren Kontur des Formwerkzeugs entspricht. Die Umformung des Vorformlings innerhalb der Kavität des Werkzeugs erfolgt entweder durch Aufweitung des Vorformlings mittels Gasdruck oder Anlegen des Vorformlings an die Innenwandung des Werkzeugs mittels Unterdruck, der über Kanäle in der Formwandung aufgebracht wird.

Wie eingangs bereits erwähnt, ist es sowohl bekannt, schlauchförmige Extrudate innerhalb eines Formwerkzeugs aufzuweiten, als auch bänderförmige oder bahnförmige Extrudate in dem Werkzeug umzuformen. Einfache Blasformen sind zweiteilig, wobei die Formhälften auf oder in einem Schließgestell relativ zueinander verfahrbar angeordnet sind. Innerhalb des Schließgestells vollziehen die Teile des Werkzeugs eine Öffnungs- und Schließbewegung. Oft ist das Schließgestell selbst noch bezüglich einer oder mehrerer ortsfest angeordneter Extrusionsköpfe verfahrbar.

Mit dem Extrusionsblasverfahren werden üblicherweise Hohlkörper wie Flaschen, Kanister, Tanks oder dergleichen hergestellt. Mit dem Blasformverfahren lassen sich naturgemäß keine Bauteile mit starken Hinterschneidungen erzeugen, zumindest nicht ohne die Zuhilfenahme von Schiebern im Werkzeug. Außerdem lassen sich Teile, bei den es auf die exakte Maßhaltigkeit der Wandstärke ankommt, nicht im Blasformverfahren herstellen, da durch die Art der Herstellung nur die Außenkontur des Hohlkörpers exakt reproduzierbar ist. Oftmals werden deswegen Gewinde oder andere Elemente an Behältern, bei denen es auf die Maßhaltigkeit ankommt, als spritzgegossenes Einlegeteil vor Einbringen des Vorformlings in das Formwerkzeug in diese eingelegt. Ähnlich wird bei dem Aufbringen von Etiketten auf Flaschen verfahren (In-Mold-Labeling).

Bei manchen technischen Bauteilen ist es wünschenswert, innerhalb des Hohlkörpers Einbauten zu platzieren. Insbesondere bei der Herstellung von Kraftstoffbehältern müssen in diese Ventile, Pumpen, Schwimmer, Schwallbehälter und dergleichen eingebracht werden. Diese können während der Herstellung oder durch Öffnungen nachträglich in den Behälter eingebracht werden.

Aus vielerlei Gründen ist besonders vorteilhaft, Einbauten schon während der Herstellung des Hohlkörpers in diesen einzubringen, wobei oftmals die exakte Platzierung und Befestigung des betreffenden Teils in dem herzustellenden Behälter Schwierigkeiten bereitet. Es ist hinlänglich bekannt, bei der Herstellung von Hohlkörpern Einbauten mit einzublasen. Dies ist beispielsweise bei der Herstellung von Batteriegehäusen aus Kunststoff oder anderen elektronischen Geräten üblich. Dabei werden die Elektroden oder Leiterbahnen mittels eines Greifers so unterhalb des Extrusionskopfs platziert, dass diese von dem schlauchförmigen Extrudat umschlossen werden. Bei dem anschließenden Schließen der Form und Aufweiten des Vorformlings wird das betreffende Element teilweise vom Kunststoff des Vorformlings durchflossen, sodass dieses fest innerhalb des herzustellenden Hohlkörpers verankert ist.

Nicht so einfach gestaltet sich dies, wenn in den Hohlkörper mehrere Einbauten mit vorgegebener räumlicher Anordnung zueinander platziert werden sollen. Dann bereitet die Befestigung dieser Einbauten an der Innenwandung des Hohlkörpers und auch die exakte Positionierung regelmäßig Schwierigkeiten.

Bei der Herstellung von Kraftstoffbehältern wäre es beispielsweise wünschenswert, Ventile, Ventilaufnahmen und die diese verbindenden Kraftstoffleitungen in Form von vollständig vormontierten Leitungsspinnen bei der Herstellung des Behälters an der Innenwandung des Behälters zu fixieren.

Ein Formwerkzeug gemäß Oberbegriff von Anspruch 1 ist beispielsweise aus der EP 1 334 817 A1 bekannt. Die EP 1 334 817 A1 beschreibt ein Verfahren zur Herstellung von schalenförmigen Formteilen oder Hohlkörpern aus thermoplastischem Kunststoff, wobei das Verfahren die Herstellung eines schlauchförmigen Vorformlings durch Extrusion von thermoplastischem Material und die axiale Aufteilung des Vorformlings zu wenigstens einer einlagigen Materialbahn umfasst, die in einem Formwerkzeug in der ersten Hitze die Endform erhält.

Aus der DE 100 10 900 A1 ist ein kombiniertes Extrusions-Pressverfahren mit einem dreiteiligen Formwerkzeug bekannt. Ein Teil dieses Formwerkzeugs ist als Presskopf beziehungsweise als Kern ausgebildet. Bei einer Variante dieses Verfahrens werden vor dem Verpressen des fertigen Hohlkörpers Teile aus Metall oder Kunststoff in Aufnahmevertiefungen des Kerns eingelegt. Diese Einlegeteile werden beim Pressen der Extrudate positionsgenau verschweißt.

Der Erfindung liegt daher die Aufgabe zugrunde, ein neuartiges Werkzeug bereitzustellen, welches bei der Herstellung von extrusionsblasgeformten Hohlkörpern die exakte Platzierung von mehreren Einbauten auch bei einer räumlich komplexen Gestaltung des Hohlkörpers ermöglicht.

Die Aufgabe wird gelöst durch ein Formwerkzeug zur Herstellung von extrusionsblasgeformten Erzeugnissen, umfassend wenigstens drei ein Formnest begrenzende Formteile, von denen zwei als Außenformen und eines als Mittelform ausgebildet sind, wobei die Außenformen und die Mittelform eine Offnungs-/ und Schließbewegung von- und zueinander vollziehen können und die Mittelform mit aus der von dieser definierten Werkzeugebene ein- und ausfahrbaren Bauteilhaltern versehen ist und wobei die verfahrbaren Bauteilhalter auf einem bezüglich der Mittellängsebene der Mittelform ein- und ausstellbaren Träger angeordnet sind. Unter Werkzeugebene im Sinne der Erfindung ist die Trennebene zwischen jeweils zwei benachbarten Teilen des Werkzeugs zu verstehen, wobei eine solche Trennebene nicht notwendigerweise, eine Ebene im strengsten geometrischen Sinne ist. Der Begriff Werkzeugebene bzw. Trennebene ist insoweit ein geläufiger Fachbegriff.

Insbesondere dadurch, dass innerhalb der Mittelform ein verfahrbarer Träger vorgesehen ist, lassen sich die Bauteilhalter auch bei komplexen Formnestkonturen, insbesondere bei außermittiger Lage der Werkzeugtrennebene in eine optimale Ausgangsposition zur Betätigung der verfahrbaren Bauteilhalter bringen.

Die Verwendung eines verfahrbaren Trägers hat darüber hinaus den Vorzug, dass die Mittelform auch bei großen Verfahrbewegungen verhältnismäßig klein dimensioniert werden kahn. Auf diese Art und Weise können auch Bauteile in verhältnismäßig tiefe Formnester eingebracht werden.

Bei Verwendung von Teleskopzylindern zur Realisierung der Ein- und Ausstellbewegung der Bauteilhalter könnte beispielsweise bei einem unsymmetrisch geteilten Werkzeug der zu einer Seite in Öffnungs- und Schließrichtung des Werkzeugs erforderliche Hub so groß sein, dass die Distanz entweder nicht zu überbrücken ist oder die Stabilität der Vorrichtung hierunter leidet. Dem wird erfindungsgemäß durch den bezüglich der Mittelform verstellbaren Träger abgeholfen.

Zweckmäßigerweise ist der Träger zu jeder Seite der Mittellängsebene der Mittelform ausstellbar oder ausfahrbar.

Bei einer Variante des Formwerkzeugs gemäß der Erfindung ist vorgesehen, dass der Träger wenigstens in der ausgestellten oder ausgefahrenen Lage verriegelbar ist. Eine solche Verriegelung ist zweckmäßigerweise mechanisch bzw. formschlüssig, sodass der Träger für eine weitere Ausstellbewegung der Bauteilhalter über beispielsweise Pneumatikzylinder oder dergleichen ein stabiles Wiederlager bildet.

Der Träger kann innerhalb der Mittelform in Öffnungs- und

Schließbewegungsrichtung der Formteile verschiebbar geführt sein.

Bei einer zweckmäßigen Variante des Formwerkzeugs gemäß der Erfindung ist vorgesehen, dass der Träger mittels wenigstens eines pneumatischen Antriebs verschiebbar ist.

Die Erfindung ist so zu verstehen, dass die Antriebe für die Bauteilhalter als auch für den Träger alternativ auch elektrisch oder hydraulisch betrieben sein können.

Bei der bevorzugten Variante des Formwerkzeugs gemäß der Erfindung sind die Bauteilhaltern über auf dem Träger befestigte bzw. gegen diese abgestützte pneumatische Antriebe bezüglich des Trägers verfahrbar.

Innerhalb der Mittelform können mehrere stufenweise ein- und ausfahrbare Träger ineinander geschachtelt angeordnet sein.

Darüber hinaus ist es im Rahmen der Erfindung möglich, dass die Träger und Bauteilhalter so zusammenwirken, dass die Verfahrbewegungen der Träger einerseits und der Bauteilhalter andererseits in verschiedene Richtungen vollzogen werden, d. h. beispielsweise senkrecht zueinander, sodass eine exakte Platzierung von mehreren Einbauteilen auch bei einer zerklüfteten Innenkontur des Hohlkörpers in einem Winkel zur Öffnungs- und Schließbewegung des Werkzeugs möglich ist.

Die Erfindung wird nachstehend anhand eines in den Zeichnungen dargestellten Ausführungsbeispiels erläutert.

Es zeigen:
- Figur 1: einen Längsschnitt durch das geöffnete Formwerkzeug gemäß der Erfindung und
- Figuren 2-7: jeweils Querschnitte durch das Formwerkzeug gemäß der Erfindung, wobei die verschiedenen Herstellungsschritte eines blasgeformten Erzeugnisses dargestellt sind.

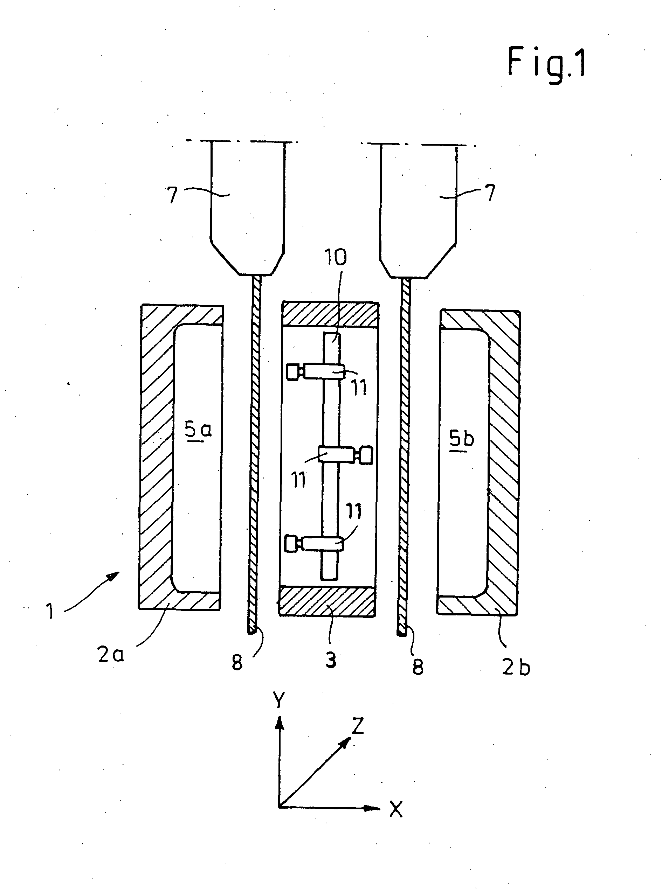

Das in Figur 1 dargestellte Formwerkzeug 1 ist als dreiteiliges Werkzeug mit zwei Außenformen 2a, 2b und einer Mittelform 3 ausgebildet. Die Erfindung ist jedoch so zu verstehen, dass insgesamt mehr als drei Formteile vorgesehen sein können, beispielsweise zwei Mittelformen und zwei Außenformen, die insgesamt ein Formnest 4 umschließen. Jede der Außenformen 2a, 2b bildet eine Teilkavität 5a, 5b, deren Innenwandung jeweils die Kontur des fertigen Erzeugnisses 6 bestimmt bzw. definiert.

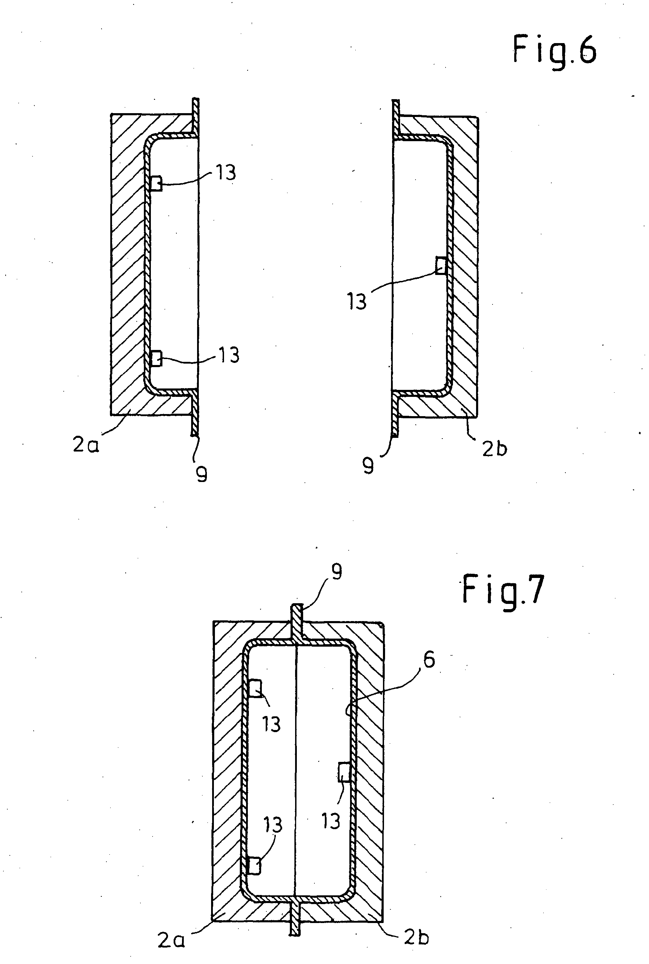

Bei dem in Figur 1 dargestellten Ausführungsbeispiel ist das Werkzeug geöffnet unterhalb von zwei Extrusionsköpfen 7 angeordnet, aus denen jeweils hängend ein bahnförmiges Extrudat 8 aus thermoplastischem, plastifiziertem Kunststoff austritt. Die Teile des Werkzeugs 1 sind auf einem nicht dargestellten Schließgestell angeordnet, auf dem die Außenformen 2a, 2b bezüglich der Mittelform 3 quer zur Extrusionsrichtung (X-Richtung) so verstellbar sind, dass sich diese bezüglich der Mittelform 3 öffnen und schließen, wobei das Extrudat 8 jeweils zwischen der Mittelform 3 und einer Außenform 2a, 2b aufgenommen wird. Wie dies beim Blasformen üblich ist, schließen sich die Außenformen 2a, 2b gegen die Mittelform 3. Die Verfahrbewegung wird, wie eingangs bereits erwähnt, auf einem Schließgestell mittels hydraulischer Antriebe bewerkstelligt, wobei das Extrudat 8 zwischen den Extrusionsköpfen 7 und dem Werkzeug 1 getrennt wird. Wie dies insbesondere den Ansichten in Figuren 6 und 7 zu entnehmen ist, steht das Extrudat seitlich über das Werkzeug 1 hinaus, sodass beim Schließen des Werkzeugs 1 ein umlaufender Flansch 9 gebildet wird.

Innerhalb der Mittelform 3 ist ein bezüglich der Mittelform verschiebbarer Träger 10 angeordnet, welcher in Öffnungs- und Schließbewegung des Werkzeugs 1 bzw. der Außenformen 2a, 2b, d. h. in X-Richtung verstellbar bzw. verschiebbar ist. Der Träger 10 ist in dieser Richtung verschiebbar geführt und wird mittels nicht dargestellter pneumatischer Antriebe bewegt. Dieser kann bedarfsweise sowohl in Richtung auf die in Figur 1 links dargestellte Außenform 2a als auch in Richtung auf die rechts dargestellte Außenform 2b aus der Mittellängsebene der Mittelform 3 hinaus verstellt werden.

Auf dem Träger 10 sind wiederum bezüglich des Trägers 10 verstellbare Bauteilhalter 11 angeordnet, die über Zylinder 12 bezüglich des Trägers 10 verstellbar sind.

Das in den Figuren dargestellte Ausführungsbeispiel ist anhand der Herstellung eines Kraftstoffbehälters als Erzeugnis 6 mit in diesem eingebauten Ventilaufnahmen 13 erläutert.

Die Ventilaufnahmen 13 werden während der Herstellung des Kraftstoffbehälters an verschiedenen Stellen mit der Innenwandung 14 verschweißt.

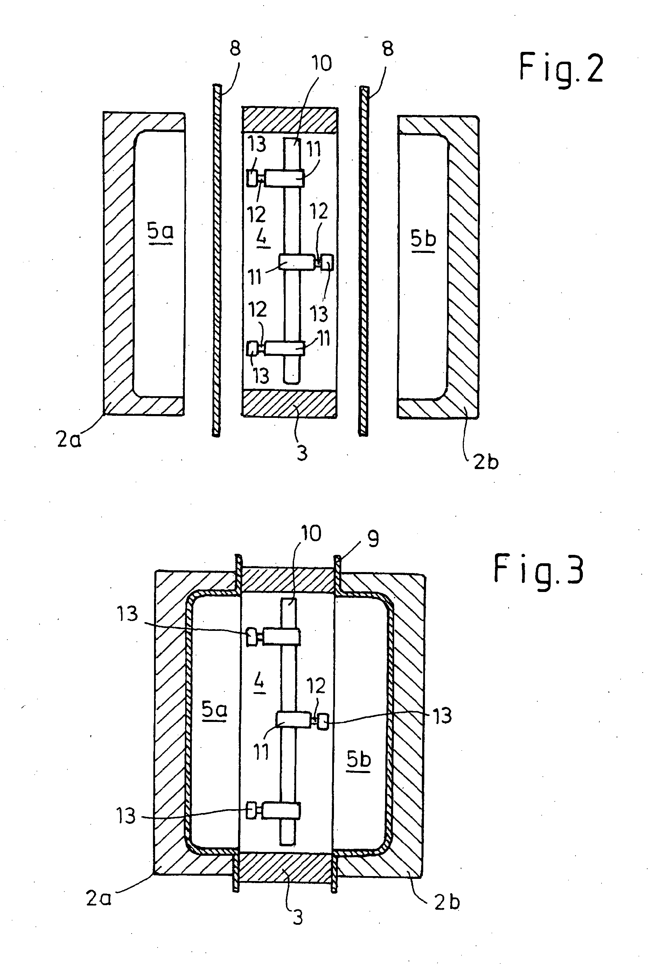

Figur 2 zeigt zunächst den Ausgangszustand des Werkzeugs 1 mit zwischen den Außenformen 2a, 2b und Mittelform 3 angeordnetem Extrudat 8.

Die Bauteilhalter 11, die wiederum auf dem Träger 10 angeordnet sind, befinden sich in ihrer Ausgangslage und sind mit den zuvor erwähnten Ventilaufnahmen 13 bestückt.

In einem nächsten Verfahrensschritt werden die Außenformen 2a, 2b gegen die Mittelform 3 geschlossen. Sodann wird das Extrudat 8 mittels Gasdruckbeaufschlagung und/oder Vakuum innerhalb des Formnestes 4 aufgeweitet, sodass sich dieses an die Innenwandung der Teilkavitäten 5a, 5b anlegt.

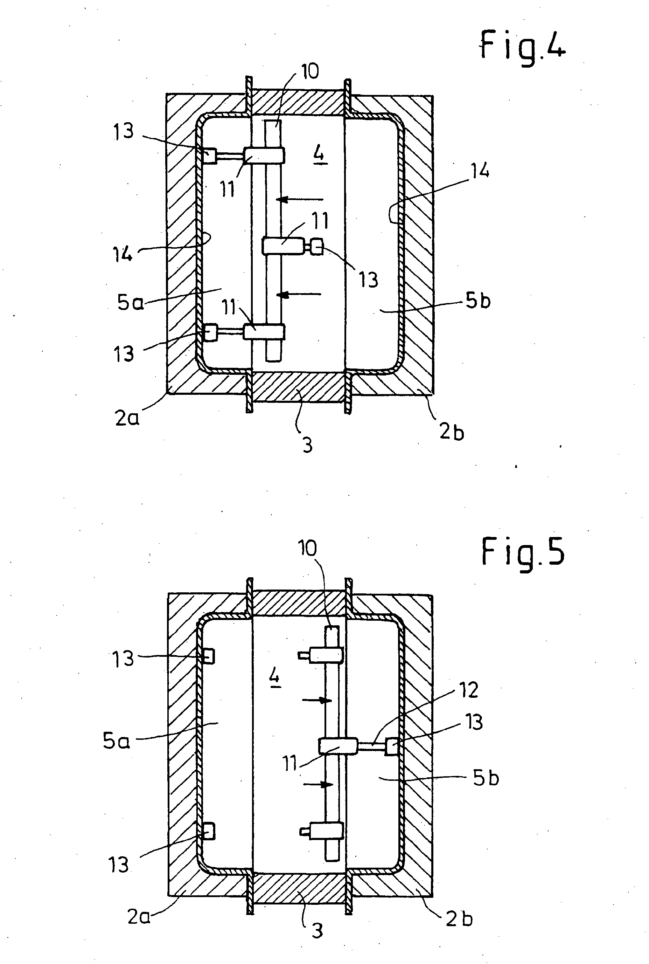

In einem weiteren Schritt wird der Träger 10 bezüglich der Mittelform 3 in Richtung auf die Außenform 2a ausgefahren. In dieser Stellung wird der Träger über nicht dargestellte Verriegelungselemente verriegelt. Sodann werden die Zylinder 12 mit den darauf befindlichen Bauteilhaltern 11 ausgefahren, sodass die Ventilaufnahmen 13 gegen die Innenwandung 14 des Erzeugnisses gepresst werden. Die ebenfalls aus Kunststoff bestehenden Ventilaufnahmen werden mit der Innenwandung 14 verschweißt oder anderweitig an der Innenwandung 14 befestigt. Die Zylinder 12 werden eingefahren, anschließend wird der Träger 10 in Richtung auf die Außenform 2b aus der Mittelform 3 ausgefahren. Wie dies in Figur 5 gezeigt ist, wird ein Bauteilhalter 11 mit einem darauf angeordneten Bauteil in Richtung auf die Innenwandung 14 des in der Teilkavität 5b befindlichen Erzeugnisses 6 bzw. Zwischenerzeugnisses ausgefahren. Das Bauteil wird auf der Innenwandung 14 platziert und mit dieser verschweißt. In einem nächsten Schritt werden der Träger 10 und die Bauteilhalter wieder eingefahren, die Außenformen 2a, 2b öffnen sich und die Mittelform wird zwischen den Außenformen 2a, 2b entfernt, d. h. in Figur 1 in Z-Richtung verschoben. Sodann können sich die Außenformen 2a, 2b wieder schließen. Der umlaufende Flansch 9 des Erzeugnisses 6 bildet eine umlaufende Schweißnaht des fertigen Erzeugnisses, das anschließend entformt werden kann.

In dem vorstehenden Ausführungsbeispiel ist das Formwerkzeug gemäß der Erfindung mit nur einem Träger beschrieben worden. Wie eingangs bereits erwähnt wurde, können in der Mittelform mehrere Träger angeordnet sein, die beispielsweise ineinander verschachtelt angeordnet sind.

Es ist ebenfalls im Rahmen der Erfindung möglich, die Ausstellbewegungen der Träger und der Bauteilhalter zueinander in mehrere Richtungen zu bewerkstelligen, obwohl dies anhand des Ausführungsbeispiels vereinfacht dargestellt ist. Die Bewegungsrichtung des Trägers und der Bauteilhalter vollzieht sich dort nur in X-Richtung.

### Bezugszeichenliste

- 1: Werkzeug
- 2a, 2b: Außenformen
- 3: Mittelform
- 4: Formnest
- 5a, 5b: Teilkavität
- 6: Erzeugnis
- 7: Extrusionsköpfe
- 8: Extrudat
- 9: Flansch
- 10: Träger
- 11: Bauteilhalter
- 12: Zylinder
- 13: Ventilaufnahme
- 14: Innenwandung des Erzeugnisses

## Patentansprüche

1. Formwerkzeug zur Herstellung von extrusionsblasgeformten Erzeugnissen, umfassend wenigstens drei ein Formnest (4) begrenzende Formteile (2a, 2b, 3), von denen zwei als Außenformen (2a, 2b) und eines als Mittelform (3) ausgebildet sind, wobei die Außenformen (2a, 2b) und die Mittelform (3) eine Öffnungs-/ und Schließbewegung von- und zueinander vollziehen können **dadurch gekennzeichnet, dass** die Mittelform (3) mit aus der von dieser definierten Werkzeugebene ein- und ausfahrbaren Bauteilhalter (11) versehen ist und wobei die verfahrbaren Bauteilhalter (11) auf einem bezüglich der Mittellängsebene der Mittelform (3) ein- und ausstellbaren Träger (10) angeordnet sind.

2. Formwerkzeug nach Anspruch 1, **dadurch gekennzeichnet, dass** der Träger (10) zu jeder Seite der Mittellängsebene der Mittelform (3) ausstellbar oder ausfahrbar ist.

3. Formwerkzeug nach einem der Ansprüche 1 oder 2, **dadurch gekennzeichnet, dass** der Träger (10) wenigstens in der ausgestellten oder ausgefahrenen Lage verriegelbar ist.

4. Formwerkzeug nach einem der Ansprüche 1 bis 3, **dadurch gekennzeichnet, dass** der Träger (10) innerhalb der Mittelform (3) in Offnungs- und Schließbewegungsrichtung der Formteile verschiebbar geführt ist.

5. Formwerkzeug nach einem der Ansprüche 1 bis 4, **dadurch gekennzeichnet, dass** der Träger (10) mittels wenigstens eines pneumatischen Antriebs verschiebbar ist.

6. Formwerkzeug nach einem der Ansprüche 1 bis 5, **dadurch gekennzeichnet, dass** die Bauteilhalter (11) über auf dem Träger (10) befestigte pneumatische Antriebe bezüglich des Trägers (10) verfahrbar sind.

## Claims

1. Mould for the production of extrusion-blow-moulded products comprising at least three mould parts (2a, 2b, 3) delimiting a mould cavity (4), two of which parts are formed as outer moulds (2a, 2b) and one as a central mould (3), the outer moulds (2a, 2b) and the central mould (3) being able to perform an opening and closing movement towards and away from one another, **characterized in that** the central mould (3) is provided with component holders (11) that can be moved in and out of this defined mould plane, and the movable component holders (11) being arranged on a carrier (10) that can be extended and retracted with respect to the central longitudinal plane of the central mould (3).

2. Mould according to Claim 1, **characterized in that** the carrier (10) can be extended or retracted on each side of the central longitudinal plane of the central mould (3).

3. Mould according to either of Claims 1 and 2, **characterized in that** the carrier (10) can be locked at least in the extended or retracted position.

4. Mould according to one of Claims 1 to 3, **characterized in that** the carrier (10) is guided displaceably within the central mould (3) in the direction of the opening and closing movement of the mould parts.

5. Mould according to one of Claims 1 to 4, **characterized in that** the carrier (10) is displaceable by means of at least one pneumatic drive.

6. Mould according to one of Claims 1 to 5, **characterized in that** the component holders (11) can be moved with respect to the carrier (10) by way of pneumatic drives fixed on the carrier (10).

## Revendications

1. Outil de moulage pour la fabrication de produits moulés par extrusion-soufflage, comportant au moins trois parties de moule (2a, 2b, 3) délimitant une cavité de moule (4), parmi lesquelles parties de moule deux sont réalisées sous forme de moules extérieurs (2a, 2b) et une est réalisée sous forme de moule central (3), les moules extérieurs (2a, 2b) et le moule central (3) pouvant effectuer un déplacement d'ouverture et de fermeture à partir les uns des autres et les uns vers les autres, **caractérisé en ce que** le moule central (3) est pourvu d'éléments de maintien de composants (11) pouvant être rentrés et sortis à partir du plan d'outil défini par celui-ci, et les éléments de maintien de composants (11) déplaçables étant disposés sur un support (10) pouvant être rétracté et déployé par rapport au plan central longitudinal du moule central (3).

2. Outil de moulage selon la revendication 1, **caractérisé en ce que** le support (10) peut être déployé ou peut être sorti de chaque côté du plan central longitudinal du moule central (3).

3. Outil de moulage selon l'une quelconque des revendications 1 ou 2, **caractérisé en ce que** le support (10) peut être verrouillé au moins dans la position déployée ou sortie.

4. Outil de moulage selon l'une quelconque des revendications 1 à 3, **caractérisé en ce que** le support (10) est guidé de manière coulissante à l'intérieur du moule central (3) dans la direction de déplacement d'ouverture et de fermeture des parties de moule.

5. Outil de moulage selon l'une quelconque des revendications 1 à 4, **caractérisé en ce que** le support (10) peut être coulissé au moyen d'au moins un entraînement pneumatique.

6. Outil de moulage selon l'une quelconque des revendications 1 à 5, **caractérisé en ce que** les éléments de maintien de composants (11) sont déplaçables par rapport au support (10) par le biais d'entraînements pneumatiques fixés sur le support (10).
